# EUROPÄISCHE PATENTSCHRIFT

(11) **EP 1 100 164 B1**
(45) Veröffentlichungstag und Bekanntmachung des Hinweises auf die Patenterteilung: **03.04.2002**
(21) Anmeldenummer: 99122273.8
(22) Anmeldetag: 09.11.1999
(51) Int. Cl.: H01R 43/00

(54) **Artikelzuführung**
Feeding of housing assemblies
Alimentation de boîtiers avec connecteurs électriques

(43) Veröffentlichungstag der Anmeldung: 16.05.2001
(73) Patentinhaber: Stocko Contact GmbH & Co. KG, 42327 Wuppertal (DE)
(72) Erfinder: Gennen, Werner, 4780 St. Vith (BE); Backes, Manfred, 4770 Born (BE); Heinen, Gerald, 4960 Malmedy (BE)
(74) Vertreter: Stenger, Watzke & Ring Patentanwälte

(56) Entgegenhaltungen:
- EP-A- 0 773 610
- US-A- 4 055 889
- US-A- 4 344 225
- US-A- 4 489 488
- US-A- 5 210 942

## Beschreibung

Die Erfindung betrifft eine Vorrichtung zur Zuführung von mit Steckelementen, insbesondere Schneidklemmkontaktelementen, ausgerüsteten Gehäusen zu einer Kabelkonfektioniermaschine für die automatische Herstellung von Leitungssätzen, mit einer Vertikalspeichereinrichtung zur Halterung von stangenförmigen Magazinen, in denen die Gehäuse übereinander angeordnet sind, und mit einem Positionshandhabungssystem für den Transport der Gehäuse zu einem Gehäuse-Werkstückträger, der - bestückt mit Gehäusen - einer Bearbeitungsstation der Kabelkonfektioniermaschine zum Kontaktieren zuführbar ist (siehe US-A-4 344 225).

Eine Artikelzuführung ist aus der EP 0 756 358 B1 der Anmelderin bekannt. Dabei sind die Gehäuse waagerecht in Kontaktierlage hintereinander in Gehäuseaufnahmestangen angeordnet, die übereinander zu nachführbaren Blockmagazinen gestapelt und in dazugehörige Zuführkanäle mittels einer Ausschubeinrichtung entleerbar sind. Die waagerechte Anordnung der Gehäuseaufnahmestangen erfordert zur Entleerung eine aktiv wirkende Ausschubeinrichtung, die exakt gesteuert werden muß und einen eigenen, reversierfähigen Antrieb besitzen muß. Dies stellt nachteiligerweise einen hohen apparativen Aufwand dar. Dies gilt in gleicher Weise für das notwendige Vorhandensein einer Mehrzahl parallel nebeneinander angeordneter Zuführkanäle unterhalb der Vertikalspeichereinrichtungen und einer davor verfahrbaren Quer-Verfahreinrichtung, die es ermöglicht, aus den Zuführkanälen Gehäuse gleicher und/oder unterschiedlicher Polzahl mittels der Ausschubeinheit in Kontaktierlage aufzunehmen.

Der Erfindung liegt in Anbetracht dieses Standes der Technik die **Aufgabe** zugrunde, die Artikelzuführung zu einer Kabelkonfektioniermaschine unter Meidung der oben genannten Nachteile zu verbessern und dabei insbesondere auch zu erreichen, daß eine hohe Flexibilität hinsichtlich der Zusammenstellung von Gehäusen gleicher und/oder verschiedener Polzahl in einfacher Weise möglich ist, daß ein Nachladen mit Magazinen ohne Maschinenstop zwecks Vermeidung von Stillstandszeiten durchführbar ist und keine Umbauzeiten bei Bestückung mit anderen Artikeln entstehen, so daß eine Just-in-time-Produktion realisiert werden kann.

Die Aufgabe ist erfindungsgemäß dadurch **gelöst**, daß die Magazine in der Vertikalspeichereinrichtung vertikal derart angeordnet sind, daß die Entnahme der darin vertikal übereinander befindlichen Gehäuse selbsttätig durch Schwerkraft erfolgt, daß in Transportrichtung der Gehäuse anschließend an die Vertikalspeichereinrichtung eine mit dem Positionshandhabungssystem anfahrbare Übergabestation mit einer 90°-Wendeeinrichtung angeordnet ist, in der die Gehäuse aus ihrer senkrechten Lage in die waagerechte Kontaktierlage bringbar und in den Gehäuse-Werkstückträger einschiebbar sind. Hiermit ist das bisher angewandte Prinzip der waagerechten Artikelzuführung in Kontaktierlage verlassen worden und eine antriebslose, nämlich mit Schwerkraft arbeitende Artikelzuführung bereitgestellt worden, die durch die senkrechte Anordnung der Gehäuse in den Magazinen maschinentechnisch sehr einfach ist, eine hohe Flexibilität hinsichtlich Magazinladung und -entleerung ermöglicht und außerordentlich bedienungsfreundlich bei vergleichsweise riesiger Bevorratung arbeitet.

Vorzugsweise sind die Magazine aus einer Mehrzahl, insbesondere drei miteinander zu einem Blockmagazin verklebten Gehäuse-Aufnahmestangen gebildet, die in radialer Ausrichtung senkrecht auf einer kreisbogenförmigen Magazinhalterung gehalten sind, wobei die Magazinhalterung eine Vielzahl von Blockmagazinen in vertikaler Positionierung radial ausgerichtet, nebeneinander angeordnet, trägt. Dabei sind die Gehäuse-Aufnahmestangen offene Kunststoffröhren rechteckigen Querschnitts, deren Profil im wesentlichen an die Außenkontur der Gehäuse angepaßt ist. Insbesondere können die Magazine in radial auf der Magazinhalterung angeordneten Aufnahmefächern gehalten sein, die nach unten zur Entnahme offen sind und zweckmäßigerweise mit einem stiftartigen Vorsprung und einem Anschlag zum Festlegen der Magazinposition gegen ein Verschieben in radialer Richtung versehen sind. Unterhalb der Magazinhalterung ist vorteilhafterweise eine zur Entnahme entfernbare Sicherung gegen Herausfallen der Gehäuse angeordnet, vorzugsweise in Form eines radial sich erstreckenden Schließriegels. Dieser kann aus der die Entnahmeöffnung verschließenden Schließstellung in radialer Richtung nach außen zur Entnahme der Gehäuse weggezogen oder weggedrückt werden, wobei vorzugsweise an der Unterseite des Schließriegels eine Seilrolle angeordnet ist, über die ein Drahtseil geführt ist, das zwecks Rückzug des Schließriegels in die Schließstellung mit einem Pneumatikzylinder verbunden ist. Mit dieser Anordnung läßt sich in außerordentlich einfacher Weise die Entnahme der Gehäuse aus sämtlichen Magazinen steuern, die auf der kreisbogenförmigen Magazinhalterung angeordnet sind, womit eine technisch elegante Lösung im Vergleich zur separaten Einzelsteuerung jedes Schließriegels entwickelt worden ist.

In einer bevorzugten Ausführungsform der Erfindung ist die kreisbogenförmige Magazinhalterung als ringförmigen Halbkreistisch ausgebildet und ist eine zusätzliche obere korrespondierende Magazinhalterung vorgesehen. Als Positionshandhabungssystem wird dabei vorzugsweise ein Ladearm verwendet, der in waagerechter Positionierung um die Mittelachse der Magazinhalterung drehbar gelagert ist und servomotorgesteuert die einzelnen Magazine in der Entnahmeebene anfahren, die einzelnen Gehäuse entnehmen und zu der Übergabestation verfahren kann. Anstelle der Verwendung eines Ladearms dieser Art wäre es auch denkbar, die Magazinhalterung als Drehtisch nach Art eines Revolvermagazins auszubilden und den Transportvorgang durch die Bewegung des Drehtisches selbst zur Entladestation durchzuführen.

Zweckmäßigerweise ist der Ladearm mit einem in radialer Richtung verfahrbaren Teleskopschieber versehen, dessen äußeres Ende einen Ladeschlitten trägt, der eine oder zwei senkrecht verlaufende Gehäuseaufnahmespuren aufweist und unter die jeweils anzusteuernde Entnahmeöffnung eines oder mehrerer Magazine servomotorgesteuert verfahrbar ist. Hierbei kann das radiale Aus- bzw. Einfahren über einen am Ladearm angeordneten Zahnriemenantrieb mit Rollenführung des Teleskopschiebers in einfacher Weise durchgeführt werden, wobei der Teleskopschieber mit Vorteil seitlich am Ladearm und der Zahnriemenantrieb auf der Oberseite des Ladearms angeordnet ist.

Der am äußeren Ende des Ladearms angeordnete Ladeschlitten weist in der Gehäuseaufnahmespur einen in der Höhe justierbaren Anschlag auf, der zur Positionierung der Gehäuse in der Gehäuseaufnahmespur dient und zur Entnahme der Gehäuse aus der Aufnahmespur in die 90°-Wendeeinrichtung nach außen wegfahrbar ist. Da in der bevorzugten Ausgestaltung der erfindungsgemäßen Artikelzuführung zwei Gehäuseaufnahmespuren parallel zueinander am Ladeschlitten vorgesehen sind, ist der Anschlag dieser Ausführungsform gabelförmig ausgebildet, wobei zur Höheneinstellung eine vom Ladearm anfahrbare Einstellstation vorgesehen ist, die vorzugsweise aus einem Servomotor und einem Spindel- oder Zahnstangengetriebe besteht, welches eine vertikal verfahrbare Einstellstange betätigt, über die die Positionierung des höhenverstellbaren Anschlags am Ladeschlitten vorgenommen wird.

Die Übergabestation weist vorzugsweise zwei parallel zueinander senkrecht angeordnete Übergabespuren auf, die unten durch eine zu öffnende Schließsperre geschlossen sind, unter der sich die 90°-Wendeeinrichtung mit einer Aufnahmespur für Gehäuse zur Beladung des Gehäuse-Werkstückträgers in Kontaktierposition mittels einer Ausschiebeeinrichtung befindet. Die Übergabestation ist vorzugsweise seitlich hin- und herverschiebbar ausgebildet, um die Übergabespuren koaxial zur Aufnahmespur positionieren zu können.

Die oben beschriebene Artikelzuführung ist im wesentlichen halbkreisförmig ausgebildet und geeignet, die einseitige Bestückung von Leitungen mit in den Gehäusen befindlichen Steckern, insbesondere Schneidklemm-Kontaktelementen, vorzunehmen. Obwohl eine solche einseitige Bestückung benötigt wird, ist doch die Herstellung von Kabelbäumen oder Kabelzweigen der Regelfall, deren Leitungen an beiden Enden mit Schneidklemm-Kontaktelementen für die gegenüberliegende Verarbeitung von beliebigen Konfektionsvarianten kontaktiert sind. Um dies zu ermöglichen, ist an der Kontaktiermaschine eine Artikelzufuhr zu beiden Leitungsenden links und rechts von der Symmetrieebene erforderlich. Mit Vorteil wird demzufolge an der erfindungsgemäßen Artikelzuführung vorgeschlagen, die Vertikalspeichereinrichtungen, Positionshandhabungssysteme und Übergabestationen für die Gehäuse-Werkstückträger beiderseits symmetrisch zur Längsachse der Bearbeitungsstation der Kabelkonfektioniermaschine anzuordnen. Dabei ist es insbesondere bevorzugt und vorteilhaft, zwei Halbkreistische als Magazinhalterung in im wesentlichen Kreisform mit geringem Mittelabstand zueinander anzuordnen und jeweils mit eigenem Positionshandhabungssystem, insbesondere mit Ladearm, Ladeschlitten, Einstellstation und Übergabestation mit 90°-Wendeeinrichtung zu versehen. Hiermit ist eine beidseitige Kontaktierung von Leitungen möglich, wobei auch die bislang notwendige 180°-Wendevorrichtung entfallen kann.

Der Weitertransport der bestückten Gehäuse-Werkstückträger findet in an sich bekannter Weise mit einer Transporteinrichtung zur Bearbeitungsstation der Kabelkonfektioniermaschine statt.

Weitere Einzelheiten, Merkmale und Vorteile von Gestaltungen des Gegenstandes der Erfindung ergeben sich aus der nachfolgenden Beschreibung der zugehörigen Zeichnung, in der eine bevorzugte Ausführungsform der erfindungsgemäßen Artikelzuführung schematisch dargestellt ist. In der Zeichnung zeigt:
- Fig. 1: eine Gesamt-Draufsicht einer Kabelkonfektioniermaschine mit erfindungsgemäßer Artikelzuführung;
- Fig. 2: die Artikelzuführung der Fig. 1 schematisch in einer Seitenansicht unter Weglassung verschiedener Vorrichtungsteile;
- Fig. 3: die Artikelzuführung in einer anderen schematischen Seitenansicht, wiederum unter Weglassung von Vorrichtungsteilen;
- Fig. 4: zwei nebeneinander angeordnete kreisbogenförmige Magazinhalterungen in Draufsicht;
- Fig. 5: einen Teilausschnitt der Fig. 4 in vergrößerter Darstellung;
- Fig. 6: einen Teilausschnitt der Fig. 5 in vergrößerter Darstellung mit zugehöriger Seitenansicht;
- Fig. 7: eine obere Magazinhalterung in Draufsicht;
- Fig. 8: das vorzugsweise verwendete Positionshandhabungssystem in Form eines Ladearms in einer schematischen Seitenansicht;
- Fig. 9: eine Übergabestation, schematisch in Draufsicht, und
- Fig. 10: die Übergabestation der Fig. 9 schematisch in einer Vorderansicht.

Es wird darauf hingewiesen, daß aus Gründen der Übersichtlichkeit und Klarheit die einzelnen Figuren der Zeichnung nicht immer mit allen Detailausgestaltungen der jeweiligen Ansicht gezeichnet sind und daß Teile, insbesondere im Vordergrund oder Hintergrund der jeweiligen Darstellung, weggelassen sein können, um das Verständnis zu erleichtern.

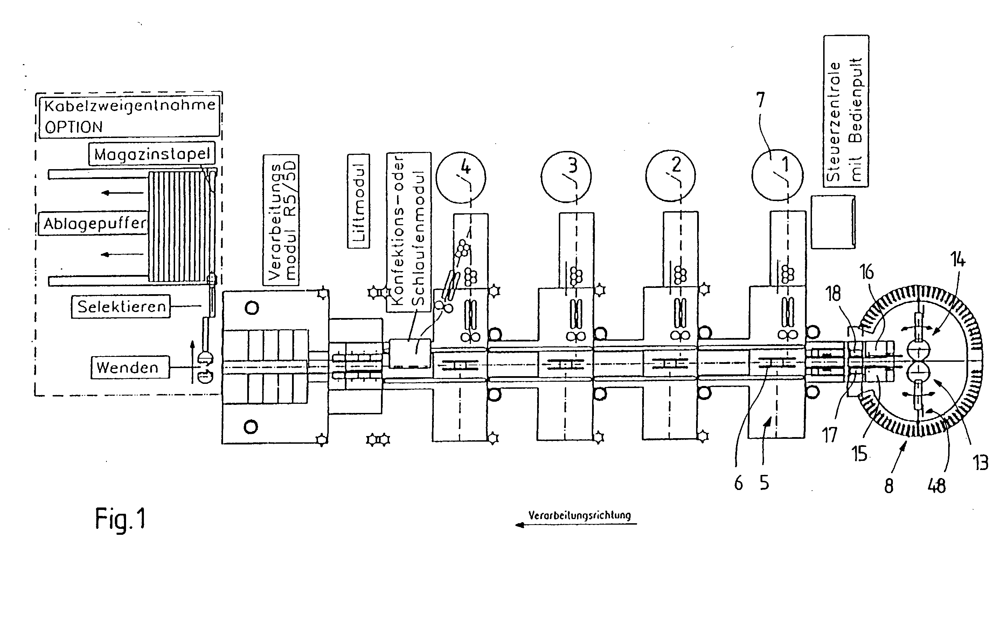

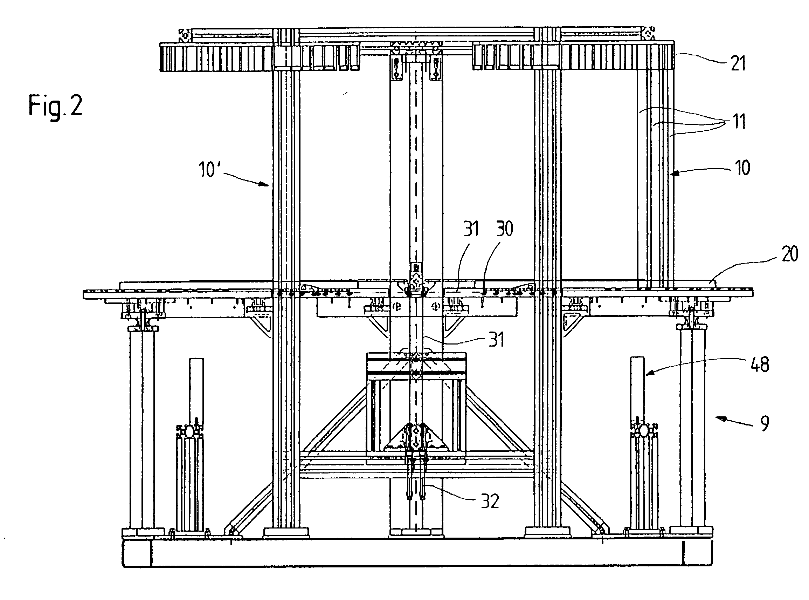

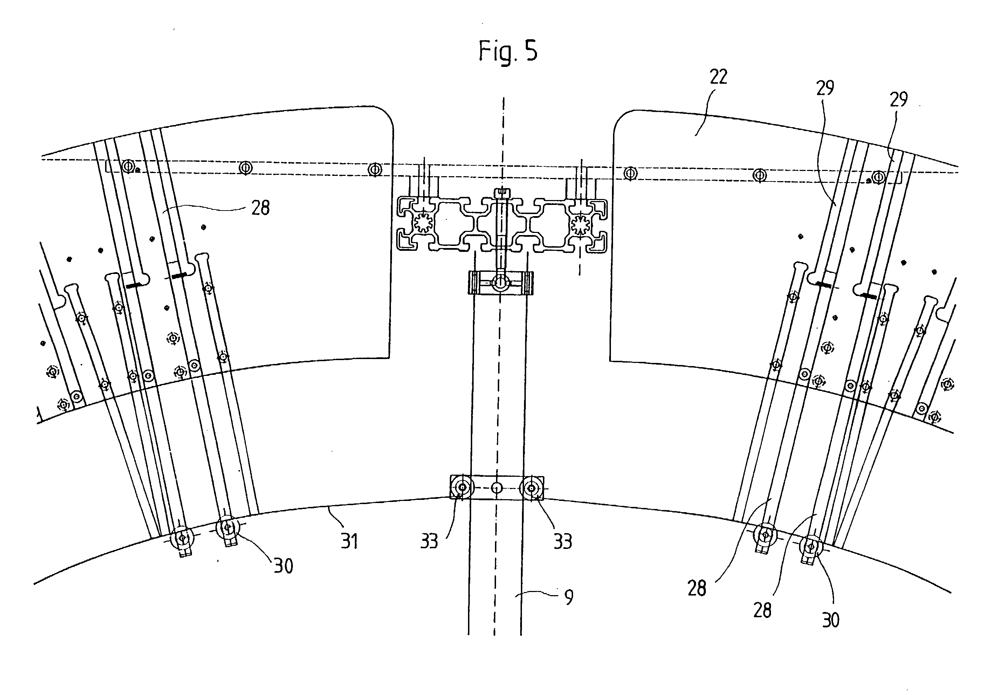

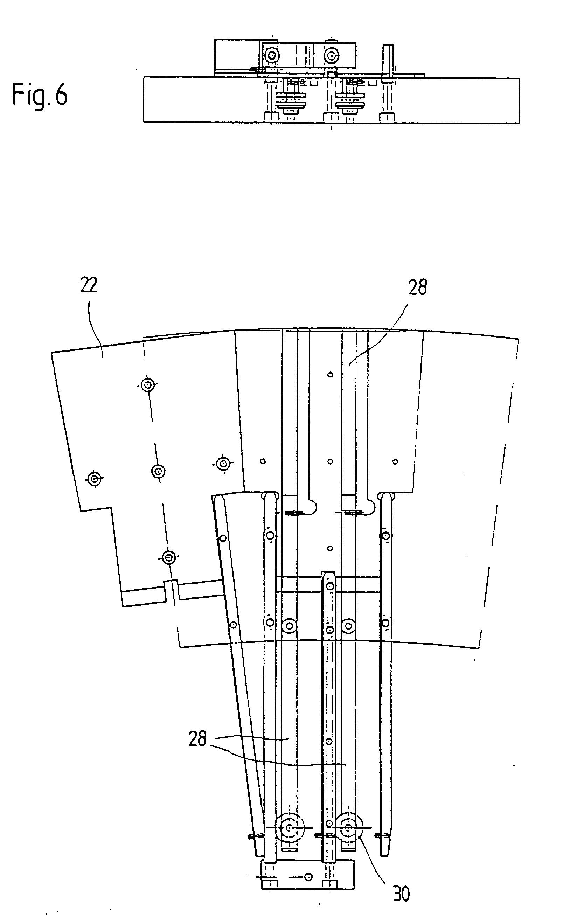

Die in Fig. 1 der Zeichnung dargestellte Kabelkonfektioniermaschine zeigt schematisch mehrere hintereinander angeordnete Konfektionsmodule 1, 2, 3, 4, die jeweils eine Bearbeitungsstation 5 mit einer Wendezange 6 aufweisen, welcher von der Rückseite aus einem Leitungsvorrat 7 Einzelleiter zugeführt werden, die in der Bearbeitungsstation 5 beidseitig nach dem Ablängen mit sogenannten Artikeln, das heißt mit Schneidklemmkontaktelementen ausgerüsteten Gehäusen, kontaktiert werden. Die Zuführung der Gehäuse zu der Bearbeitungsstation 5 erfolgt mit der in Fig. 1 der Zeichnung rechts dargestellten Artikelzuführung 8, die beide Seiten der Bearbeitungsstation 5 zum Zwecke der Bereitstellung von Schneidklemmkontaktelementen für eine gegenüberliegende Verarbeitung von beliebigen Konfektionsvarianten an beiden Leiterenden versorgt. Die Artikelzuführung 8 ist in den Fig. 2 bis 10 der Zeichnung näher dargestellt.

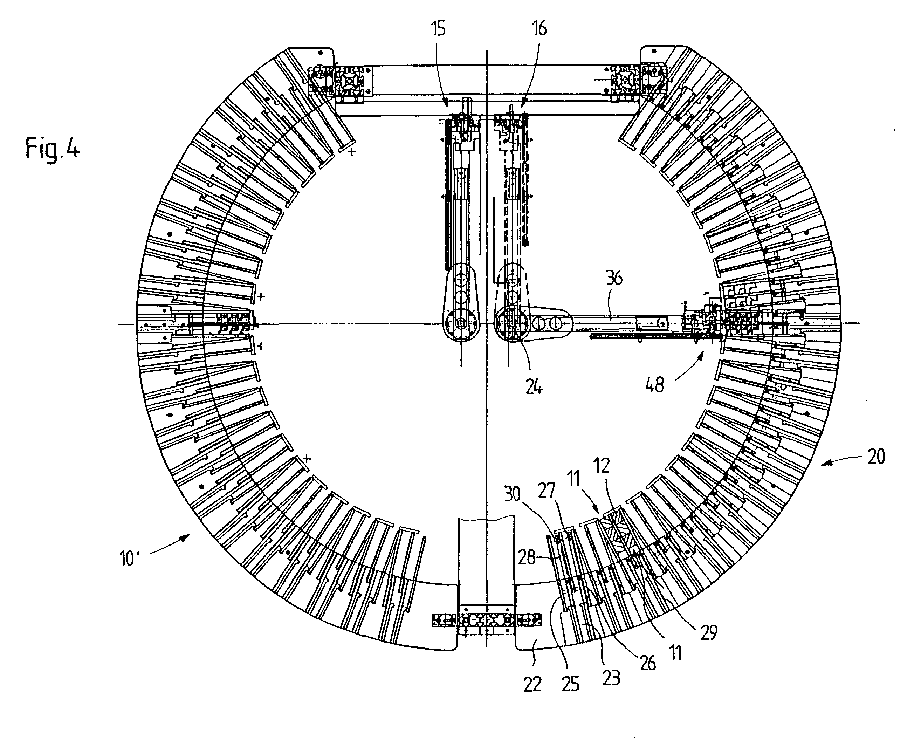

Gemäß Fig. 2 der Zeichnung weist die Artikelzuführung 8 ein Maschinengestell 9 auf, welches etwa in Arbeitshöhe eine Vertikalspeichereinrichtung 10 für Magazine 11 trägt, in denen mit Schneidklemmkontaktelementen bestückte Gehäuse gelagert sind. Eine gleichartige Vertikalspeichereinrichtung 10' findet sich auf der gegenüberliegenden Halb-Seite des Gestells 9, von der aus die zweite Seite der Bearbeitungsstation 5 bedient wird. Jedes der stangenförmigen Magazine 11 besteht aus drei miteinander verklebten Gehäuse-Aufnahmestangen 12 (siehe Fig. 4), die etwa eine Länge 800 mm haben und im Profil im wesentlichen an die Außenkontur der Gehäuse angepaßt sind. Die Magazine 11 sind in der Vertikalspeichereinrichtung 10 vertikal stehend derart angeordnet, daß die Entnahme der in den einzelnen Gehäuseaufnahmestangen 12 vertikal übereinander befindlichen Gehäuse selbsttätig durch Schwerkraft erfolgen kann, wenn die unten befindliche, normalerweise geschlossene, Entnahmeöffnung geöffnet wird. Die Entnahme der Artikel aus den Magazinen erfolgt mittels eines weiter unten näher beschriebenen Positionshandhabungssystems 13 bzw. 14, mit dem die den Magazinen 11 in der gewünschten Konfektionsvariante (gemäß dem anzufertigenden Kabelbaum) entnommenen und zusammengestellten Gehäuse einer Übergabestation 15 bzw. 16 zugeführt werden, in der die Gehäuse aus ihrer senkrechten Lage in die waagerechte Kontaktierlage bringbar und in einen Gehäuse-Werkstückträger 17 bzw. 18 einschiebbar sind. Die in den Gehäusewerkstückträgern 17 und 18 auf diese Weise zusammengestellten und gehaltenen Gehäusemodule für die beidseitige Kontaktierung der Leiter werden mit einer nicht näher beschriebenen Transportvorrichtung der Bearbeitungsstation 5 zugeführt und dort kontaktiert.

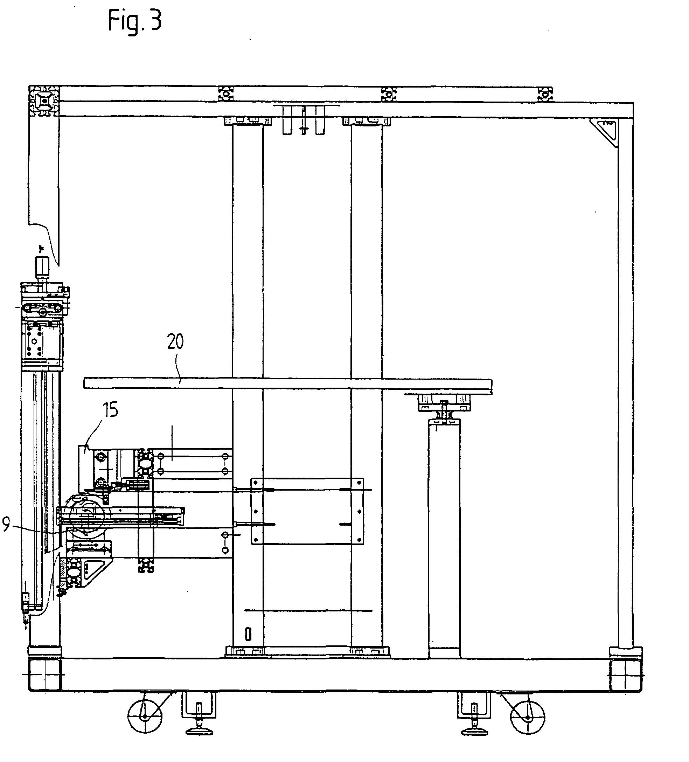

Fig. 3 der Zeichnung zeigt die Artikelzuführung 8 in Ausschnitten aus einer um 90° gegenüber der Betrachtungsposition der Fig. 2 versetzten Seitenansicht, um die Positionierung der Übergabestation 15 mit zugehöriger 90°-Wendeeinrichtung 19 zu verdeutlichen.

Nachfolgende Beschreibung der in den Fig. 4 bis 10 dargestellten Teile der Artikelzuführung 8 beziehen sich zwecks Vereinfachung nur auf die eine Seite der Artikelzuführung, die für die Anlieferung der Artikel zur Kontaktierung eines Leiterendes vorgesehen ist. Die Artikelzuführung zur anderen Seite ist prinzipiell gleichartig aufgebaut, so daß zwecks Vermeidung von Wiederholungen auf die erneute Beschreibung dieses Teils der Artikelzuführung verzichtet werden kann.

Die Vertikalspeichereinrichtung 10 weist gemäß Fig. 2 der Zeichnung eine untere kreisbogenförmige Magazinhalterung 20 und parallel im Abstand dazu eine obere korrespondierende Magazinhalterung 21 auf, zwischen denen eine Vielzahl der oben beschriebenen Blockmagazine 11 in vertikaler Positionierung radial ausgerichtet nebeneinander gehalten sind. Fig. 4 der Zeichnung zeigt in einer Draufsicht die untere Magazinhalterung 20, die aus einem ringförmigen, nahezu halbkreisförmigen Tisch 22 mit darauf ausgebildeten Aufnahmefächern 23 zur Halterung der Magazine 11 besteht. Jedes Aufnahmefach 23 erstreckt sich in radialer Richtung zur senkrechten Mittelachse 24 hin und ist begrenzt von zwei mit Abstand zueinander angeordneten, etwa 2 cm hohen Stegen 25, 26, zwischen die nebeneinander zwei Magazine 11, jeweils bestehend aus drei Gehäuseaufnahmestangen 12, bis zu einem Anschlag 27 einschiebbar sind, der so ausgelegt ist, daß er die Magazinposition gegen ein Verschieben in radialer Richtung festlegt. Im inneren Bereich des ringförmigen Tisches 22 sind die Aufnahmefächer 23 nach unten offen, um eine Entnahme der Gehäuse zu ermöglichen, wie weiter unten näher beschrieben wird.

Unterhalb der Entnahmeöffnungen der Magazine 11 findet sich eine zur Entnahme entfernbare Sicherung gegen Herausfallen der Gehäuse aus den Magazinen 11 in Form jeweils eines radial sich erstreckenden Schließriegels 28 pro Magazin 11, der an einer Führung 29 radial nach außen weggedrückt werden kann, um das zugehörige Magazin 11 unten zu öffnen und die Entnahme von darin befindlichen Gehäusen zu ermöglichen. Hierzu ist an der Unterseite jedes Schließriegels 28 eine Seilrolle 30 am inneren freien Ende angeordnet, über die ein Drahtseil 31 geführt ist, welches zwecks Rückzug des Schließriegels 28 in die Schließstellung mit einem Pneumatikzylinder 32 verbunden ist. Das Drahtseil 31 ist mit seinem einen Ende an einem Fixpunkt der Vertikalspeichereinrichtung befestigt, sodann halbkreisförmig über sämtliche Seilrollen 30 der Schließriegel 28 geführt und mit seinem anderen Ende an dem Pneumatikzylinder 32 angeschlossen. Zur korrekten Seilführung können am Maschinengestell 9 zusätzlich Umlenkrollen 33 angeordnet sein.

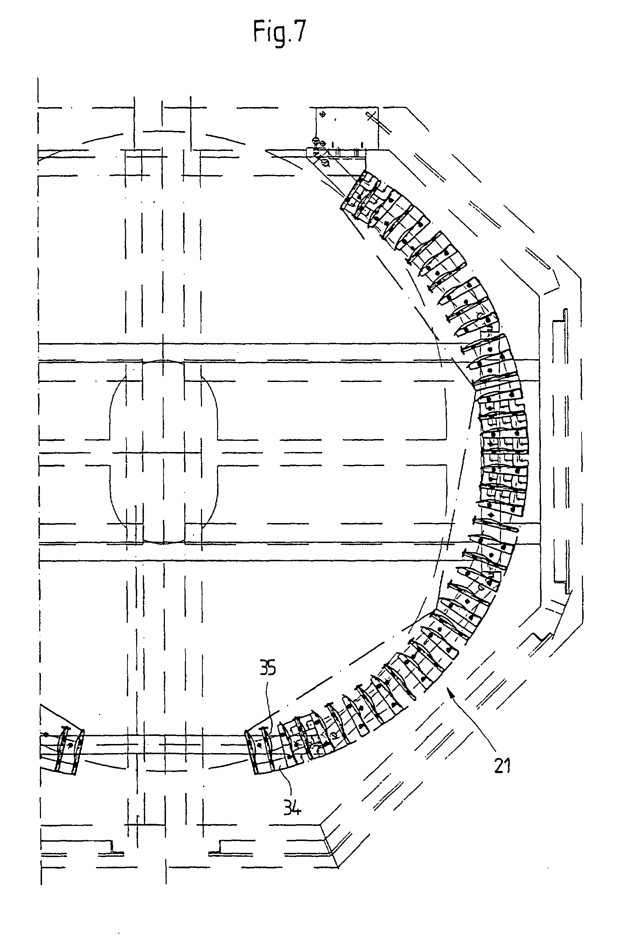

Mit der unteren Magazinhalterung 20 wirkt die in Fig. 7 dargestellte obere Magazinhalterung 21 zusammen, die korrespondierende Aufnahmefächer 34 für die oberen Enden der Magazine 11 besitzt, welche jeweils seitlich mit einer Blattfeder 35 zur Verbesserung der Klemmhalterung ausgerüstet sind.

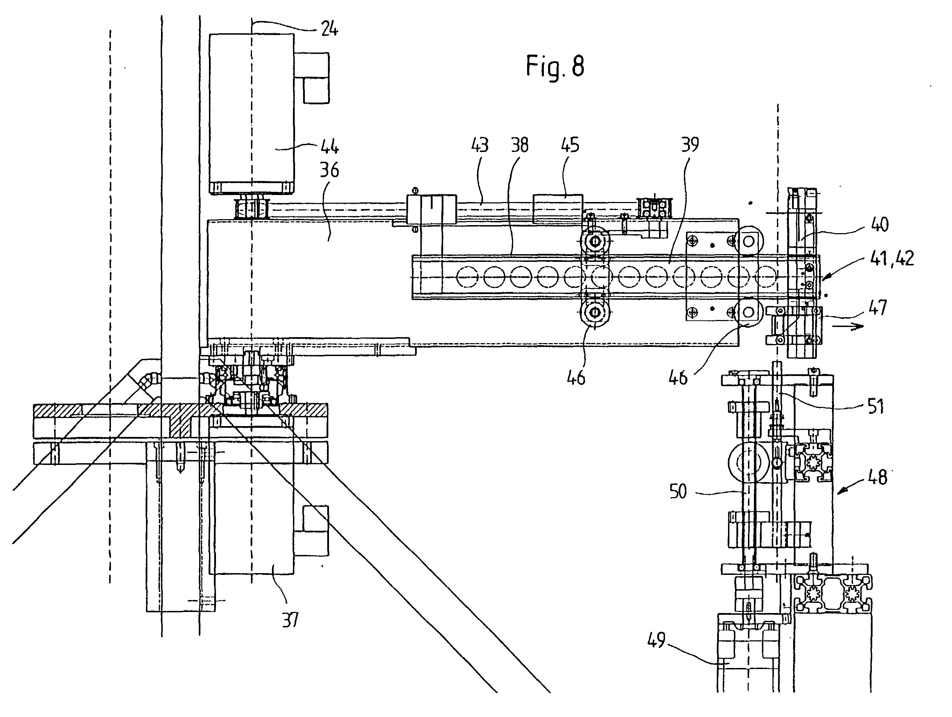

Die in der Vertikalspeichereinrichtung 10 in der oben beschriebenen Weise magazinierten Gehäuse müssen einzeln entnommen werden, zu Modulen beliebiger Konfektionsvarianten zusammengestellt werden und sodann dem Gehäusewerkstückträger 17 bzw. 18 übergeben werden, mit dem sodann über ein separates Transportsystem die Zuführung zu der Bearbeitungsstation 1 der Kabelkonfektioniermaschine erfolgt. Zur Erfüllung dieser Aufgaben ist ein besonderes Positionshandhabungssystem 13 bzw. 14 vorgesehen, welches als wesentliches Element einen Ladearm 36 aufweist, der in waagerechter Positionierung um die Mittelachse 24 geringfügig unterhalb der unteren Magazinhalterung 20 drehbar gelagert ist und servomotorgesteuert die einzelnen Magazine 11 in der Entnahmeebene anfahren kann, die einzelnen Gehäuse entnehmen und zu der Übergabestation 16 gemäß Fig. 4 der Zeichnung verfahren kann. Zwei Positionen des Ladearms 36 sind in Fig. 4 der Zeichnung zur Verdeutlichung der Funktion dargestellt, während konstruktive Einzelheiten der Fig. 8 der Zeichnung entnehmbar sind. Demnach besteht der Ladearm 36 aus einem im Querschnitt rechteckigen Hohlprofilträger, dessen inneres Ende drehbar auf der senkrechten Mittelachse 24 gelagert ist und dort über einen antriebsmäßig angeschlossenen Servomotor 37 über einen halbkreisförmigen Bewegungsbereich verfahren werden kann derart, daß jedes Aufnahmefach 23 und folglich jedes Magazin 11 positionsgenau angefahren werden kann.

Für die eigentliche Entnahme der Gehäuse aus den Magazinen 11 ist seitlich am Ladearm 36 in einer Führung 38 ein Teleskopschieber 39 in radialer Richtung verfahrbar angeordnet, der an seinem außenseitigen freien Ende einen Ladeschlitten 40 trägt, der mit zwei senkrecht nebeneinander angeordneten Spuren 41, 42 zur Aufnahme von Gehäusen aus zwei nebeneinander angeordneten Gehäuseaufnahmestangen 12 zweier Magazine 11 versehen ist. Die Spuren 41, 42 sind in der Seitenansicht der Fig. 8 nicht erkennbar und daher durch einen Bezugszeichenpfeil verdeutlicht. Sie weisen einen Querschnitt entsprechend der äußeren Form der Gehäuse auf und können jeweils in senkrechter Reihe übereinander angeordnet eine Mehrzahl von Gehäusen aufnehmen, die den Gehäuseaufnahmestangen 12 entnommen werden. Zum Vor- und Zurückfahren des Teleskopschiebers 39 ist auf der Oberseite des Ladearms 36 ein Zahnriemenantrieb 43 positioniert, der über einen separaten Servoantrieb 44 in beiden Drehrichtungen beweglich ist. Ein auf dem Zahnriemen angeordneter Mitnehmer 45 erfaßt den Teleskopschieber 39, der entsprechend aus- und einfahrbar ist. Hierbei ist eine Rollenführung und Lagerung mit Rollen 46 für eine leichte Beweglichkeit angewandt worden.

Der am äußeren Ende des Ladearms 36 angeordnete Ladeschlitten 40 weist in jeder Gehäuseaufnahmespur 41, 42 einen in der Höhe justierbaren Anschlag 47 auf, der zur Positionierung der Gehäuse in der jeweiligen Gehäuseaufnahmespur 41, 42 dient und der zur Entnahme der Gehäuse aus der jeweiligen Gehäuseaufnahmespur 41, 42 und Überführung in die 90°-Wendeeinrichtung 19 nach außen wegfahrbar ist. Der Anschlag 47 ist im konkreten Ausführungsbeispiel gabelförmig ausgebildet, um mit seinen zwei Gabelarmen in die Gehäuseaufnahmespuren 41, 42 eingreifen zu können. Zur Höheneinstellung ist etwa mittig unterhalb des die untere Magazinhalterung 20 bildenden Ringes in Flucht mit dem Ladeschlitten 40 eine von dem Ladearm 36 anfahrbare Einstellstation 48 vorgesehen, die aus einem Servomotor 49 und einem Kugelspindelgetriebe 50 besteht, welches eine vertikal verfahrbare Einstellstange 51 betätigt, über die die Positionierung des höhenverstellbaren Anschlags 47 am Ladeschlitten 40 vorgenommen wird. Die Übergabestation 15 bzw. 16 ist an der Seite der Bearbeitungsstation 5 am Ende des 180°-Verfahrweges des Ladearms 36 angeordnet und derart unterhalb des Ladeschlittens 40 positioniert, daß die darin befindlichen Gehäuse aus ihren Gehäuseaufnahmespuren 41, 42 in zwei koaxial dazu angeordnete, senkrecht verlaufende Übergabespuren 52, 53 fallen können, wenn der Anschlag 47 aus der Sperrstellung weggefahren ist und die Spuren freigegeben sind.

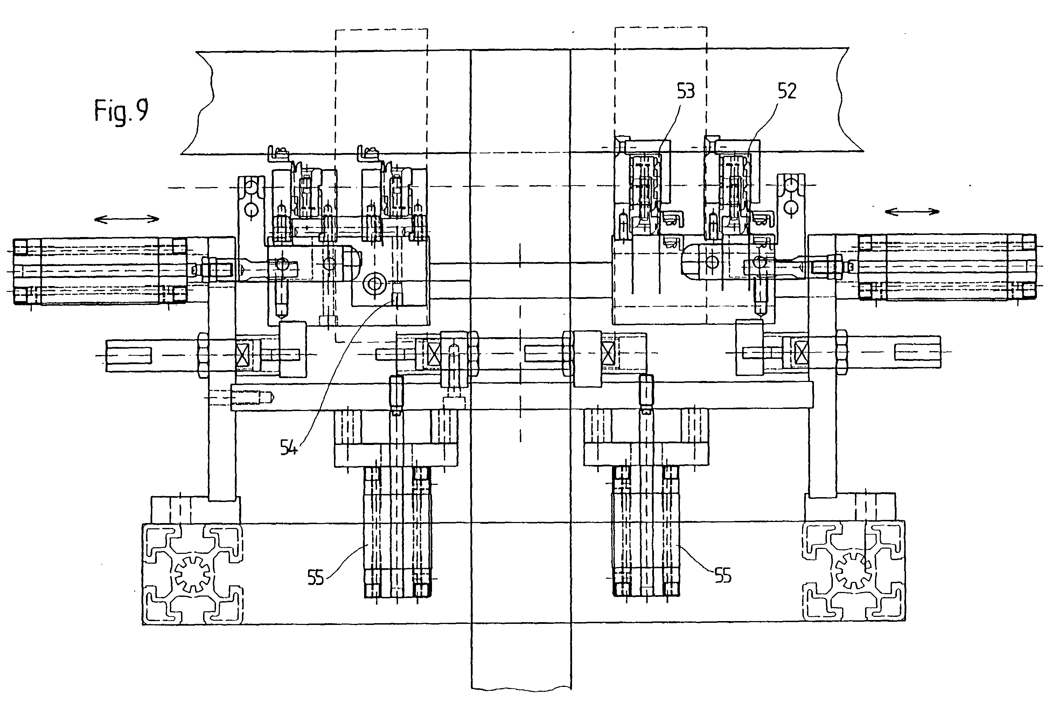

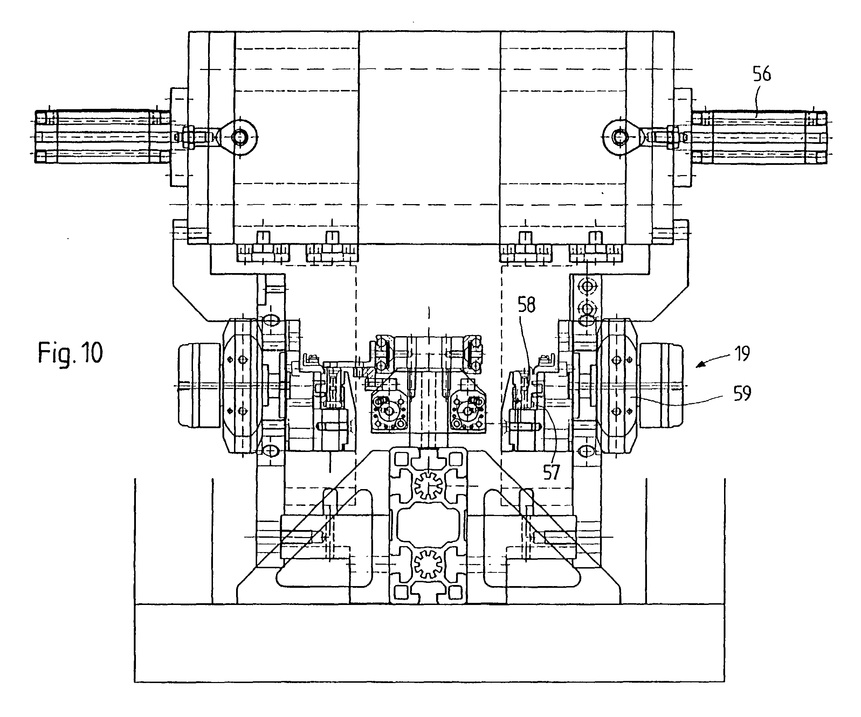

Auch die Übergabespuren 52, 53 sind unten jeweils durch eine zu öffnende Schließsperre 54 geschlossen, die durch einen Servomotor 55 betätigt werden. In Fig. 9 der Zeichnung ist aufgrund der Darstellungsweise nur eine Schließsperre 54 im linken Bereich der Artikelzuführung erkennbar. Bei einem Öffnen der Schließsperre 54 fallen die in der jeweiligen Übergabespur 52 bzw. 53 befindlichen Gehäusezusammenstellungen in die unterhalb der Spur angeordnete 90°-Wendeeinrichtung 19, die in Fig. 10 der Zeichnung näher dargestellt ist. Um die 90°-Wendeeinrichtung 19 aus beiden Übergabespuren 52 bzw. 53 heraus befüllen zu können, ist eine seitliche Verschiebbarkeit der Übergabestation mittels des Zylinders 56 in Pfeilrichtung gemäß Fig. 9 der Zeichnung vorgesehen.

Die 90°-Wendeeinrichtung 19 weist eine Aufnahmespur 57 für in Zeichnung 10 eingezeichnete Gehäuse 58 auf, die zunächst in senkrechter Positionierung aus der Übergabestation heraus aufgenommen werden und dann mittels eines Drehzylinders 59 in die in Fig. 10 der Zeichnung dargestellte waagerechte Position der Aufnahmespur 57 verschwenkt werden. In nicht dargestellter Weise werden sodann die Gehäuse mittels einer Ausschiebeeinrichtung in den davor angeordneten Gehäuse-Werkstückträger 17 bzw. 18 als der Konfektionsvariante entsprechend zusammengestelltes Gehäusemodul eingeschoben und der Kontaktierung zugeführt.

Die Arbeitsweise der oben beschriebenen Artikelzuführung ist wie folgt:

Zunächst werden die beiden im wesentlichen zu einem Kreis angeordneten Vertikalspeichereinrichtungen 10 und 10' mit gefüllten Magazinen 11 beladen. Hierzu werden jeweils zwei Blockmagazine, das heißt aus drei miteinander verklebten Gehäuseaufnahmestangen 12 zusammengesetzte Magazine, nebeneinander in jedes Aufnahmefach 23 von außen her eingeschoben und gegen radiales Verschieben mittels des Anschlags 27 gesichert. Die Entnahmeöffnung unten an den Magazinen ist dann durch jeweils einen Schließriegel 28 je Blockmagazin verschlossen, so daß die Gehäuse nicht nach unten herausfallen können.

Mit jeweils einem Ladearm 36 können nun die Vertikalspeichereinrichtungen 10 bzw. 10' zur Entnahme von Gehäusen aus den Magazinen gehandhabt werden. Hierzu wird der Ladearm 36 zunächst mittels seines Servoantriebs 37 in die mittlere Position auf dem zugehörigen Halbkreis zur dort befindlichen Einstellstation 38 verfahren. Über deren Servoantrieb wird sodann der Anschlag 47 am Ladeschlitten 40 entsprechend der zur Kontaktierung vorgesehenen Gehäuse nach vorgegebenen Polzahlen korrekt justiert. Anschließend wird der Ladeschlitten automatisch auf seinem Drehkreis von 180° nacheinander zu den Magazinen verfahren, die entsprechende Gehäuse aufweisen und werden nacheinander die Gehäuse entsprechend der vorgesehenen Modulzusammenstellung in die Gehäuseaufnahmespuren 41 und 42 des Ladeschlittens 40 übernommen. Hierzu wird der Teleskopschieber 39 mittels Servomotor 44 und Zahnriemenantrieb 43 nach außen vorgefahren, erfaßt dabei mit einer vorlaufenden Kante die beiden Schließriegel 28 der angefahrenen Aufnahmefächer 23, so daß die Entnahmeöffnungen freigegeben werden und die Gehäuse 58 allein aufgrund ihrer Schwerkraft in die Gehäuseaufnahmespuren 41 und 42 des Ladeschlittens 40 fallen. Der Teleskopschieber 39 wird dann über den Servoantrieb 44 zurückgefahren, wobei gleichzeitig die beiden Schließriegel 28 wieder in ihre Schließstellung zurückgezogen werden, indem über das Drahtseil 31 und die beiden Seilrollen 30 an den Schließriegeln mittels des angeschlossenen Pneumatikzylinders 32 eine entsprechende Rückzugskraft ausgeübt wird.

Nachdem in dieser Weise die beiden Gehäuseaufnahmespuren 41 und 42 des Ladeschlittens in der gewünschten Zusammenstellung mit Gehäusen beladen worden sind, wird der Ladearm 36 zur Übergabestation 15 bzw. 16 am maschinenseitigen Ende der unteren Magazinhalterung 20 verfahren und werden die zusammengestellten Gehäuse an einen Gehäusewerkstückträger 17 bzw. 18 übergeben. Hierzu wird zunächst der gabelförmige Anschlag 47 des Ladeschlittens 40 pneumatisch durch axiales Verfahren nach außen geöffnet, so daß die beiden Gehäuseaufnahmespuren 41 und 42 gleichzeitig entleert werden können. Die Gehäuse fallen in die koaxial dazu angeordneten beiden Übergabespuren 52 und 53 der Übergabestation und sind in diesen Spuren durch jeweils eine unten angeordnete Sperre gehalten. Der Ladeschlitten 40 ist nun zu einer erneuten Beladung frei, wozu der Ladearm 36 zur erneuten Beladung entweder direkt an ein entsprechendes Aufnahmefach 23 heranfährt oder in Abhängigkeit von dem Programm zunächst zur Einstellstation 48.

Derweil wird die Übergabespur 52 oder 53 durch Wegziehen der Sperre geöffnet, die sich koaxial über der Aufnahmespur 57 der 90°-Wendeeinrichtung befindet. Die Gehäuse fallen in die Aufnahmespur 57, die dann durch die Wendeeinrichtung um 90° gedreht wird, so daß sie koaxial waagerecht zu dem davor angeordneten Gehäuse-Werkstückträger 17 bzw. 18 liegt. Dessen Beladung findet dann mittels einer Ausschiebeeinrichtung statt, die den zusammengestellten Gehäusemodul von hinten in der Aufnahmespur 57 erfaßt und in den vorgelagerten Gehäuse-Werkstückträger verschiebt. Die entleerte 90°-Wendeeinrichtung 19 wird dann wieder in die senkrechte Position gedreht. Zwischenzeitlich ist durch seitliches Verschieben die zweite Übergabespur in eine Position verbracht worden, die wiederum koaxial zu der Aufnahmespur 57 der 90°-Wendeeinrichtung liegt, so daß nach Wegziehen der Sperre die erneute Befüllung der Wendeeinrichtung durch Entleerung der zweiten Übergabespur erfolgen kann.

Zwischenzeitlich ist der Ladeschlitten in der oben beschriebenen Weise erneut beladen worden und verfährt der Ladearm 36 wieder zur Übergabestation und so weiter gemäß obiger Beschreibung des Funktionsablaufes.

Die gefüllten Gehäuse-Werkstückträger werden mit einer separaten Transportvorrichtung der Bearbeitungsstation 5 zugeführt.

### Bezugszeichenliste

- 1: Konfektionsmodul
- 2: Konfektionsmodul
- 3: Konfektionsmodul
- 4: Konfektionsmodul
- 5: Bearbeitungsstation
- 6: Wendezange
- 7: Leitungsvorrat
- 8: Artikelzuführung
- 9: Maschinengestell
- 10: Vertikalspeichereinrichtung
- 10': Vertikalspeichereinrichtung
- 11: Magazine
- 12: Gehäuseaufnahmestangen
- 13: Positionshandhabungssystem
- 14: Positionshandhabungssystem
- 15: Übergabestation
- 16: Übergabestation
- 17: Gehäuse-Werkstückträger
- 18: Gehäuse-Werkstückträger
- 19: 90°-Wendeeinrichtung
- 20: untere Magazinhalterung
- 21: obere Magazinhalterung
- 22: Tisch
- 23: Aufnahmefächer
- 24: senkrechte Mittelachse
- 25: Stege
- 26: Stege
- 27: Anschlag
- 28: Schließriegel
- 29: Führung
- 30: Seilrolle
- 31: Drahtseil
- 32: Pneumatikzylinder
- 33: Umlenkrolle
- 34: Aufnahmefläche
- 35: Blattfeder
- 36: Ladearm
- 37: Servomotor
- 38: Führung
- 39: Teleskopschieber
- 40: Ladeschlitten
- 41: Spuren
- 42: Spuren
- 43: Zahnriemenantrieb
- 44: Servoantrieb
- 45: Mitnehmer
- 46: Rollen
- 47: Anschlag
- 48: Einstellstation
- 49: Servomotor
- 50: Kugelspindel
- 51: Einstellstange
- 52: Übergabespur
- 53: Übergabespur
- 54: Schließsperre
- 55: Zylinder
- 56: Zylinder
- 57: Aufnahmespur
- 58: Gehäuse
- 59: Drehzylinder

## Patentansprüche

1. Vorrichtung (8) zur Zuführung von mit Steckelementen, insbesondere Schneidklemmkontaktelementen, ausgerüsteten Gehäusen (58) zu einer Kabelkonfektioniermaschine (1, 2, 3, 4) für die automatische Herstellung von Leitungssätzen, mit einer Vertikalspeichereinrichtung (10) zur Halterung von Magazinen (11), in denen die Gehäuse (58) übereinander angeordnet sind, und mit einem Positionshandhabungssystem (13, 14) für den Transport der Gehäuse (58) zu einem Gehäuse-Werkstückträger (17, 18), der - bestückt mit Gehäusen (58) - einer Bearbeitungsstation (5) der Kabelkonfektioniermaschine (1, 2, 3, 4) zum Kontaktieren zuführbar ist,
**dadurch gekennzeichnet,**
**daß** die Magazine (11) in der Vertikalspeichereinrichtung (10) vertikal derart angeordnet sind, daß die Entnahme der darin vertikal übereinander befindlichen Gehäuse (58) selbsttätig durch Schwerkraft erfolgt, daß in Transportrichtung der Gehäuse (58) anschließend an die Vertikalspeichereinrichtung (10) eine mit dem Positionshandhabungssystem anfahrbare Übergabestation (15; 16) mit einer 90°-Wendeeinrichtung (19) angeordnet ist, in der die Gehäuse (58) aus ihrer senkrechten Lage in die waagerechte Kontaktierlage bringbar und in den Gehäuse-Werkstückträger (17; 18) einschiebbar sind.

2. Vorrichtung nach Anspruch 1, **dadurch gekennzeichnet, daß** die Magazine (11) aus einer Mehrzahl, insbesondere drei, miteinander zu einem Blockmagazin verklebten Gehäuse-Aufnahmestangen (12) gebildet sind, die in radialer Ausrichtung senkrecht auf einer kreisbogenförmigen Magazinhalterung (20) gehalten sind, wobei die Magazinhalterung (20) eine Vielzahl von Blockmagazinen in vertikaler Positionierung radial ausgerichtet, nebeneinander angeordnet, trägt.

3. Vorrichtung nach Anspruch 2, **dadurch gekennzeichnet, daß** die Gehäuse-Aufnahmestangen (12) offene Kunststoffröhren rechteckigen Querschnitts sind, deren Profil im wesentlichen an die Außenkontur der Gehäuse (58) angepaßt ist.

4. Vorrichtung nach Anspruch 2 und 3, **dadurch gekennzeichnet, daß** die Magazine (11) in radial in der Magazinhalterung (20) angeordneten Aufnahmefächern (23) gehalten sind, die nach unten zur Entnahme offen sind, wobei unterhalb der Magazinhalterung (20) eine zur Entnahme entfernbare Sicherung gegen Herausfallen der Gehäuse (58) angeordnet ist.

5. Vorrichtung nach Anspruch 4, **gekennzeichnet durch** einen stiftartigen Vorsprung und einen Anschlag (27) zum Festlegen der Magazinposition gegen ein Verschieben in radialer Richtung.

6. Vorrichtung nach Anspruch 4 oder 5, **dadurch gekennzeichnet, daß** die Sicherung ein radial sich erstreckender Schließriegel (28) ist, an dessen Unterseite eine Seilrolle (30) angeordnet ist, über die ein Seil (31) geführt ist, das zwecks Rückzug des Schließriegels (28) in die Schließstellung mit einem Pneumatikzylinder (32) verbunden ist.

7. Vorrichtung nach einem der Ansprüche 2 bis 6, **dadurch gekennzeichnet, daß** die kreisbogenförmige Magazinhalterung als ringförmiger Halbkreistisch (22) ausgebildet ist und daß eine zusätzliche obere korrespondierende Magazinhalterung (21) vorgesehen ist.

8. Vorrichtung nach einem der Ansprüche 1 bis 7, **dadurch gekennzeichnet, daß** das Positionshandhabungssystem einen Ladearm (36) aufweist, der in waagerechter Positionierung um die senkrechte Mittelachse (24) drehbar gelagert ist und servomotorgesteuert die einzelnen Magazine (11) in der Entnahmeebene anfahren, die einzelnen Gehäuse (58) entnehmen und zu der Übergabestation (15; 16) verfahrbar ist.

9. Vorrichtung nach Anspruch 8, **dadurch gekennzeichnet, daß** der Ladearm (36) mit einem in radialer Richtung verfahrbaren Teleskopschieber (39) versehen ist, dessen äußeres Ende einen Ladeschlitten (40) trägt, der eine oder zwei senkrecht verlaufende Gehäuseaufnahmespuren (41; 42) aufweist und unter die jeweils anzusteuernde Entnahmeöffnung eines oder mehrerer Magazine (11) servomotorgesteuert verfahrbar ist.

10. Vorrichtung nach Anspruch 9, **dadurch gekennzeichnet, daß** der Teleskopschieber (39) durch einen am Ladearm (36) angeordneten Zahnriemenantrieb (43) angetrieben ist.

11. Vorrichtung nach Anspruch 10, **dadurch gekennzeichnet, daß** der Teleskopschieber (39) seitlich am Ladearm (36) und der Zahnriemenantrieb (43) auf der Oberseite des Ladearms (36) angeordnet sind.

12. Vorrichtung nach einem der Ansprüche 9 bis 11, **dadurch gekennzeichnet, daß** der am äußeren Ende des Ladearms (36) angeordnete Ladeschlitten (40) in der Gehäuseaufnahmespur (41; 42) einen in der Höhe justierbaren Anschlag (47) aufweist, der zur Entnahme der Gehäuse (58) aus der Gehäuseaufnahmespur (41; 42) in die 90°-Wendeeinrichtung (19) nach außen wegfahrbar ist.

13. Vorrichtung nach Anspruch 12, **dadurch gekennzeichnet, daß** der Anschlag (47) gabelförmig ausgebildet ist und zur Höheneinstellung eine vom Ladearm (36) anfahrbare Einstellstation (48) vorgesehen ist, die vorzugsweise aus einem Servomotor (49) und einem Spindel- oder Zahnstangengetriebe (50) besteht, welches eine vertikal verfahrbare Einstellstange (51) betätigt.

14. Vorrichtung nach einem der Ansprüche 8 bis 13, **dadurch gekennzeichnet, daß** die Übergabestation (15; 16) mindestens eine, vorzugsweise zwei parallel zueinander senkrecht angeordnete Übergabespuren (52, 53) aufweist, die unten durch eine zu öffnende Schließsperre (54) geschlossen sind, unter der sich die 90°-Wendeeinrichtung (19) mit einer Aufnahmespur (57) für Gehäuse (58) zur Beladung des Gehäuse-Werkstückträgers (17; 18) in Kontaktierposition mittels einer Ausschiebeeinrichtung befindet.

15. Vorrichtung nach Anspruch 14, **dadurch gekennzeichnet, daß** die Übergabestation seitlich hin- und herverschiebbar ausgebildet ist.

16. System mit 2 Vorrichtungen nach einem der Ansprüche 1 bis 15, **dadurch gekennzeichnet, daß** die Vorrichtungen zu beiden Enden der zu kontaktierenden Kabelkonfektionierungsmaschine ausgebildet ist, indem symmetrisch zur Längsachse der Bearbeitungsstation beiderseits Vertikalspeichereinrichtungen, Positionshandhabungssysteme und Übergabestationen vorgesehen sind.

17. System nach Anspruch 16, **dadurch gekennzeichnet, daß** zwei Halbkreistische (22) als Magazinhalterung in im wesentlichen Kreisform mit geringem Mittelabstand zueinander angeordnet sind und jeweils mit eigenem Positionshandhabungssystem (13 bzw. 14), insbesondere mit Ladearm, Ladeschlitten, Einstellstation und Übergabestation mit 90°-Wendeeinrichtung ausgestattet sind.

## Claims

1. Apparatus (8) for feeding housings (58) provided with plug-in elements, in particular insulation displacement contact elements, to a cable manufacturing machine (1, 2, 3, 4) for the automatic production of line harnesses, with a vertical storage device (10) for accommodating magazines (11), in which the housings (58) are superimposed, and with a positioning-handling system (13, 14) for transporting the housings (58) to a housing-workpiece carrier (17, 18), which - equipped with housings (58) - can be fed to a processing station (5) of the cable manufacturing machine (1, 2, 3, 4) for contacting,
**characterised in**
**that** the magazines (11) are disposed vertically in the vertical storage device (10) such that the housings (58) superimposed vertically therein are automatically removed by gravity, that the vertical storage device (10) is followed in the transport direction of the housings (58) by a delivery station (15; 16), which can be approached by the positioning-handling system, with a 90° turning device (19), in which the housings (58) can be brought out of their perpendicular position into the horizontal contacting position and inserted in the housing-workpiece carrier (17; 18).

2. Apparatus according to Claim 1, **characterised in that** the magazine is formed from a plurality, in particular three, housing holding rods (12), which are stuck together to produce a block magazine and are retained in radial alignment perpendicularly on a circular arc-shaped magazine mount (20), wherein the magazine mount (20) bears a plurality of block magazines disposed side by side and radially aligned in a vertical position.

3. Apparatus according to Claim 2, **characterised in that** the housing holding rods (12) are open plastics tubes of a rectangular cross section, the profile of which is essentially adapted to the outer contour of the housings (58).

4. Apparatus according to Claims 2 and 3, **characterised in that** the magazines (11) are retained in holding compartments (23), which are disposed radially in the magazine mount (20) and are open downwards for removal purposes, wherein a safety mechanism, which can be taken away for removal purposes, is disposed below the magazine mount (20) to prevent the housings (58) from falling out.

5. Apparatus according to Claim 4, **characterised by** a pin-like projection and a stop (27) for fixing the magazine position against displacement in the radial direction.

6. Apparatus according to Claim 4 or 5, **characterised in that** the safety mechanism is a radially extending locking bolt (28), at the underside of which a rope pulley (30) is disposed, over which pulley a rope (31) is guided, this being connected to a pneumatic cylinder (32) for the purpose of returning the locking bolt (28) to the locked position.

7. Apparatus according to any one of Claims 2 to 6, **characterised in that** the circular arc-shaped magazine mount is formed as an annular semicircular table (22), and that an additional upper corresponding magazine mount (21) is provided.

8. Apparatus according to any one of Claims 1 to 7, **characterised in that** the positioning-handling system comprises a loading arm (36), which is mounted in a horizontal position such that it can rotate about the perpendicular centre axis (24) and, under servomotor control, can approach the individual magazines (11) in the removal plane, remove the individual housings (58) and be moved to the delivery station (15; 16).

9. Apparatus according to Claim 8, **characterised in that** the loading arm (36) is provided with a telescopic slide (39), which can move in the radial direction and the outer end of which bears a loading carriage (40), which comprises one or two perpendicularly extending housing holding tracks (41; 42) and can move under servomotor control into a position below the removal opening, to be activated at the time, of one or more magazine(s) (11).

10. Apparatus according to Claim 9, **characterised in that** the telescopic slide (39) is driven by a toothed belt drive (43) disposed at the loading arm (36).

11. Apparatus according to Claim 10, **characterised in that** the telescopic slide (39) is disposed laterally at the loading arm (36), and the toothed belt drive (43) is disposed on the top side of the loading arm (36).

12. Apparatus according to any one of Claims 9 to 11, **characterised in that** the loading carriage (40) disposed at the outer end of the loading arm (36) comprises in the housing holding track (41; 42) a vertically adjustable stop (47), which can be moved away outwards in order to remove the housings (58) from the housing holding track (41; 42) into the 90° turning device (19).

13. Apparatus according to Claim 12, **characterised in that** the stop (47) is in the shape of a fork and, for vertical adjustment purposes, an adjusting station (48), which can be approached by the loading arm (36), is provided, which station preferably consists of a servomotor (49) and a spindle or rack-and-pinion drive (50), which actuates a vertically mobile adjusting rod (51).

14. Apparatus according to any one of Claims 8 to 13, **characterised in that** the delivery station (15; 16) comprises at least one, preferably two delivery tracks (52, 53), which are disposed perpendicularly parallel to one another and are closed at the bottom by a closing barrier (54), which can be opened and below which there is located the 90° turning device (19) with a holding track (57) for housings (58) for loading the housing-workpiece carrier (17; 18) in the contacting position by means of an expulsion device.

15. Apparatus according to Claim 14, **characterised in that** the delivery station is formed such that it can reciprocate laterally.

16. System with two apparatus according to any one of Claims 1 to 15, **characterised in that** the apparatus are formed at both ends of the cable manufacturing machine which is to be contacted by providing vertical storage devices, positioning-handling systems and delivery stations on both sides symmetrically with respect to the longitudinal axis of the processing station.

17. System according to Claim 16, **characterised in that** two semicircular tables (22) are disposed at a small centre distance from one another as a magazine mount in an essentially circular shape and are each fitted with their own positioning-handling system (13 and 14, respectively), in particular with a loading arm, loading carriage, adjusting station and delivery station with 90° turning device.

## Revendications

1. Dispositif (8) pour l'amenée de boîtiers (58) équipés d'éléments enfichables, en particulier d'éléments de contact à borne à guillotine, à une machine de confection de câbles (1, 2, 3, 4) pour la fabrication automatique de faisceaux de lignes, comprenant un dispositif de rangement vertical (10) pour porter des magasins (11) dans lesquels les boîtiers (58) sont disposés les uns au-dessus des autres, et comprenant un système de manutention en position (13, 14) pour le transport des boîtiers (58) à un porte-boîtier (17, 18) qui - une fois garni de boîtiers (58) - peut être amené à une station de façonnage (5) de la machine de confection de câbles (1, 2, 3, 4) pour la mise en contact, **caractérisé en ce que** les magasins (11) sont disposés verticalement dans le dispositif de rangement vertical (10), de façon que le prélèvement des boîtiers (58) qui y sont superposés verticalement s'effectue automatiquement par gravité, **en ce que**, dans la direction de transport des boîtiers (58), est disposée, à la suite du dispositif de rangement vertical (10), une station de transfert (15 ; 16) accessible par le système de manutention en position et munie d'un système de retournement à 90° (19), dans lequel les boîtiers (58) peuvent être amenés de leur position verticale à la position horizontale de mise en contact et insérés dans le porte-boîtier (17 ; 18).

2. Dispositif selon la revendication 1, **caractérisé en ce que** les magasins (11) sont formés d'une pluralité, en particulier de trois barres de logement de boîtiers (12) qui sont collées entre elles pour former un magasin monobloc et qui sont tenues avec une orientation radiale verticalement sur un support de magasins en arc de cercle (20), le support de magasins (20) portant une pluralité de magasins monoblocs en positionnement vertical orientés radialement, disposés côte à côte.

3. Dispositif selon la revendication 2, **caractérisé en ce que** les barres de logement de boîtiers (12) sont des tubes en matière plastique ouverts à section transversale rectangulaire dont le profil est sensiblement adapté au contour extérieur des boîtiers (58).

4. Dispositif selon les revendications 2 et 3, **caractérisé en ce que** les magasins (11) sont tenus dans des compartiments récepteurs (23) qui sont disposés radialement dans le support de magasins (20) et qui sont ouverts vers le bas pour les besoins du prélèvement, au-dessous du support de magasins (20) étant disposé un dispositif de sécurité, amovible pour les besoins du prélèvement, contre la chute des boîtiers (58).

5. Dispositif selon la revendication 4, **caractérisé par** une saillie en forme de broche et une butée (27) pour immobiliser le magasin en position et l'empêcher de bouger dans la direction radiale.

6. Dispositif selon la revendication 4 ou 5, **caractérisé en ce que** le dispositif de sécurité est un verrou de fermeture (28) qui s'étend radialement et sur le dessous duquel est disposée une poulie (30) sur laquelle est guidé un filin (31), lequel est relié à un vérin pneumatique (32) dans le but de ramener le verrou de fermeture (28) en position fermée.

7. Dispositif selon une des revendications 2 à 6, **caractérisé en ce que** le support de magasins en arc de cercle est conçu sous la forme d'une table semi-circulaire annulaire (22), et **en ce qu'**un support de magasins supérieur supplémentaire correspondant (21) est prévu.

8. Dispositif selon une des revendications 1 à 7, **caractérisé en ce que** le système de manutention en position comporte un bras de chargement (36) qui est monté avec un positionnement horizontal de manière tournante autour de l'axe vertical médian (24) et peut, sous la commande d'un servomoteur, accéder aux magasins individuels (11) dans le plan de prélèvement, prélever les boîtiers individuels (58) et les acheminer à la station de transfert (15 ; 16).

9. Dispositif selon la revendication 8, **caractérisé en ce que** le bras de chargement (36) est muni d'un coulisseau télescopique (39) qui est mobile dans la direction radiale et dont l'extrémité extérieure porte, un chariot de chargement (40), lequel comporte une ou deux pistes verticales de réception de boîtier (41, 42) et, sous la commande d'un servomoteur, peut se placer sous l'ouverture de prélèvement à actionner d'un ou plusieurs magasins (11).

10. Dispositif selon la revendication 9, **caractérisé en ce que** le coulisseau télescopique (39) est entraîné par un dispositif d'entraînement à courroie dentée (43) disposé sur le bras de chargement (36).

11. Dispositif selon la revendication 10, **caractérisé en ce que** le coulisseau télescopique (39) est disposé latéralement sur le bras de chargement (36) et le dispositif d'entraînement à courroie dentée (43) est disposé sur le dessus du bras de chargement (36).

12. Dispositif selon une des revendications 9 à 11, **caractérisé en ce que** le chariot de chargement (40) disposé à l'extrémité extérieure du bras de chargement (36) comporte, dans la piste de réception de boîtier (41 ; 42), une butée (47) qui est réglable en hauteur et qui, pour les besoins du prélèvement des boîtiers (58), peut être sortie vers l'extérieur hors de la piste de réception de boîtier (41 ; 42) pour pénétrer dans le système de retournement à 90° (19).

13. Dispositif selon la revendication 12, **caractérisé en ce que** la butée (47) est fourchue et, pour son réglage en hauteur, il est prévu une station de réglage (48) qui est accessible par le bras de chargement (36) et qui est constituée de préférence d'un servomoteur (49) et d'un mécanisme à vis sans fin ou à crémaillère (50), lequel actionne une tige de réglage à déplacement vertical (51).

14. Dispositif selon une des revendications 8 à 13, **caractérisé en ce que** la station de transfert (15 ; 16) comporte au moins une, de préférence deux pistes de transfert (52, 53) qui sont disposés verticalement, parallèlement l'une à l'autre, et qui sont fermées en partie basse par un organe de fermeture à ouvrir (54), au-dessous duquel se trouve le système de retournement à 90° (19) avec une piste réceptrice (57) pour des boîtiers (58) dans le but de charger le porte-boîtier (17 ; 18) dans la position de mise en contact au moyen d'un dispositif sortant.

15. Dispositif selon la revendication 14, **caractérisé en ce que** la station de transfert est conçue avec une possibilité de translation latérale en va-et-vient.

16. Système à 2 dispositifs selon une des revendications 1 à 15, **caractérisé en ce que** les dispositifs sont disposés aux deux extrémités de la machine de confection de câbles par le fait que des dispositifs de rangement vertical, des systèmes de manutention en position et des stations de transfert sont prévus de part et d'autre, de manière symétrique à l'axe longitudinal de la station de façonnage.

17. Système selon la revendication 16, **caractérisé en ce que** deux tables semi-circulaires (22) sont associées l'une à l'autre avec une faible distance centrale pour constituer un support de magasins à forme sensiblement circulaire et sont équipées chacune de leur propre système de manutention en position (13 et, respectivement, 14), en particulier avec bras de chargement, chariot de chargement, station de réglage et station de transfert à système de retournement à 90°.
